# EUROPÄISCHE PATENTSCHRIFT

(11) **EP 0 714 749 B1**
(45) Veröffentlichungstag und Bekanntmachung des Hinweises auf die Patenterteilung: **15.12.1999**
(21) Anmeldenummer: 95250252.4
(22) Anmeldetag: 17.10.1995
(51) Int. Cl.: B29C 45/40, B29C 45/26

(54) **Einrichtung zum Entfernen von gegossenen Formteilen**
Apparatus for removing moulded articles
Dispositif pour enlever des pièces moulées

(30) Priorität: 28.11.1994 DE 4444395
(43) Veröffentlichungstag der Anmeldung: 05.06.1996
(73) Patentinhaber: MANNESMANN Aktiengesellschaft, 40213 Düsseldorf (DE)
(72) Erfinder: Stengel, Frank, Dipl.-Ing., D-04735 Rossleben (DE)
(74) Vertreter: Meissner, Peter E., Dipl.-Ing.

(56) Entgegenhaltungen:
- EP-A- 0 395 805
- EP-A- 0 487 734
- DE-A- 2 227 200
- US-A- 4 958 676
- PATENT ABSTRACTS OF JAPAN vol. 014, no. 335 (M-1000), 19.Juli 1990 & JP 02 116528 A (TOYO MACH & METAL CO LTD), 1.Mai 1990,
- PATENT ABSTRACTS OF JAPAN vol. 94, no. 010 & JP 06 297512 A (NIIGATA ENG CO LTD), 25.Oktober 1994,

## Beschreibung

Die Erfindung betrifft eine Einrichtung zum Entfernen von spritzgegossenen Formteilen aus einem Formwerkzeug einer eine bewegliche Formplatte aufweisenden Spritzgießmaschine, insbesondere für Kunststoff.

Eine hierzu vergleichbare Einrichtung ist beispielweise aus der DE 2227200 A bekannt.

Bei dieser Einrichtung ist an einer Formaufspannplatte beabstandet eine Trägerplatte angeordnet. Ferner ist heir ein Auswerfzylinder, dessen kolbenstange durch eine Öffnung der Trägerplatte geführt ist, eine Auswerferplatte und eine Ausschraubwelle zum Drehen eines Gewindekerns vorgesehen, wobei die Ausschraubwelle über einen Riemen von einem auf einer Formbacke befestigten Motor angetrieben ist.

Als allgemeiner Stand der Technik auf diesem Gebiet seien noch die EP-A-0487734, die US-A-4958676 und die JP-A-06-297512 erwähnt.

Aus der DE 3839445 A1 ist eine Vorrichtung zur Entnahme von Formteilen aus einer Formmaschine einer Spritzgießmaschine für Kunststoffe bekannt, die zwecks Entnahme der Formteile in die Maschine eingreift und die entnommenen Teile an einer festgelegten Stelle außerhalb der Spritzgießmaschine abwirft. Hierzu ist ein Gestell an der Schließeinheit der Spritzgießmaschine befestigt, welches auf einem Schlitten verschiebbar ist und einen Greiferarm aufweist, an dessen kopfseitigem Ende eine Greiferzange angeordnet ist, mit der die Formteile gegriffen werden.

Diese aufwendig aufgebaute, wartungsintensive Vorrichtung kann nur Formteile greifen, die unmittelbar nach ihrer Formung handhabbar sind. Eine Drehbewegung, wie sie beim Entformen von Gewindekernen erforderlich ist, kann von der bekannten Vorrichtung nicht durchgeführt werden.

Aus der DE 3542878 A1 ist eine Auswerfeinrichtung für Spritzgießmaschinen mit einer Auswerferplatte bekannt, bei der neben Distanzstücken auch Auswerfzylinder mit zugeordneten Auswerferstiften vorgesehen sind. Bei dieser komplett mit Auswerfelementen versehenen Auswerferplatte ist kein Platz für eine Ausschraubeinrichtung vorhanden.

Bei der Verarbeitung von Kunststoffen auf Spritzgießmaschinen, aber auch beim Einsatz von Metalldruckgießmaschinen, ist es oftmals erforderlich, Formteile mit Gewindebohrungen herzustellen. Dies wird üblicherweise dadurch erreicht, daß in den Hohlraum des Formwerkzeuges Kerne eingefahren werden, die mit Kunststoff umspritzt werden und so im Formteil z.B. Gewindebohrungen bilden. Um das Formteil aus dem Formwerkzeug entfernen zu können ist es erforderlich, die Gewindekerne aus dem Formteil zu schrauben. Dabei wird entweder das Formteil aus dem Formwerkzeug gedrückt oder so freigegeben, daß es im Anschluß daran mittels einer Auswerfeinrichtung aus der Form gedrückt wird. Üblicherweise werden sowohl die Gewindekerne des Werkzeugs als auch die Auswerfeinrichtung von speziellen Vorrichtungen an der Spritzgießmaschine angetrieben, wobei diese Vorrichtungen an der Rückseite der beweglichen Werkzeugaufspannplatte angeordnet sind und aus einer Ausschraubvorrichtung, die eine zentral angeordnete Welle am Werkzeug antreibt, und einer Auswerfeinrichtung, die mehrere symmetrisch um die Welle am Werkzeug angeordnete Auswerferbolzen axial verschieben kann, bestehen. In der Regel erfolgt der Antrieb der Vorrichtung durch die Maschinenhydraulik. Der Aufbau dieser Einrichtungen ist kompliziert und ihre Handhabung erfordert einen hohen Aufwand.

Die Erfindung hat sich das Ziel gesetzt, eine Einrichtung zum Entfernen von Formteilen zu schaffen, die es ermöglicht, ohne größere Umbauten an verschiedene Werkzeuganforderungen angepaßt zu werden, insbesondere ohne Einschränkungen des Auswerferhubes und bei alternativer Benutzung von Formwerkzeugen mit Zentralauswerfer.

Erfindungsgemäß wird dieses Problem durch die Einrichtung nach Anspruch 1 gelöst. Die Unteransprüche zeigen vorteilhafte Weiterbildung der Erfindung auf.

Die Einrichtung weist dabei eine Trägerbaugruppe auf, die gegen die Formaufspannplatte verspannt ist und auf die zentral ein Ausschraubmotor und parallel zu dessen Mittenachse Auswerferzylinder angeordnet sind, deren Kolbenstangen mit der Auswerferplatte verbunden sind, welche in der Mittenachse eine Öffnung aufweist, durch die der antriebsseitige Wellenteil des Ausschraubmotors geführt ist..

Hierdurch wird vermieden, wie sonst üblich, auf der Rückseite der beweglichen Werkzeugaufspannplatte eine Getriebeeinheit in der Weise zu montieren, daß die zentrale Ausdrehwelle des Werkzeugs in die abtriebsseitige Muffe des Getriebes eingreift und der Antriebsmotor außerhalb des Zentrums angeordnet ist.

Durch die erfindungsgemäße zentrale Anordnung der Ausdreheinrichtung wird erreicht, daß:
- keine Einschränkung des Auswerferhubes in Abhängigkeit der Getriebeabmessungen eintritt.
- keine Demontage der Getriebeeinheit erforderlich ist, wenn Werkzeuge ohne Gewindekerne, aber mit zentralen Auswerfbolzen, eingesetzt werden.
- die Kopplung der Auswerfbolzen beim Einbau des Werkzeugs nicht erschwert ist und somit ein hoher Montageaufwand beim Wechsel des Formwerkzeuges vermieden wird
- bei Nutzung von Formwerkzeugen mit einer abweichenden Geometrie der Ausdrehwelle ein Umbau der Getriebeeinheit unterbleibt
- die Ausdrehwelle des Werkzeugs normierbar ist, da die Lage der Kraftübertragungselemente an der Ausdrehwelle nicht mehr vom Abstand der Getriebeeinheit von der Werkzeugaufspannfläche der beweglichen Aufspannplatte abhängt.

In einer vorteilhaften Weiterbildung der Erfindung sind die antriebsseitige und die abtriebsseitige Welle, die auf den Zapfen des Ausschraubmotors aufgesteckt ist, durch ein Federelement gegeneinander verspannt, so daß sich die Antriebswelle automatisch an verschiedene Längen der Ausschraubwelle des Formwerkzeugs anpaßt und bei verschiedenen Geometrien der Ausschraubwelle des Formwerkzeugs nur die abtriebsseitige Welle auszutauschen ist.

In einer weiteren Ausgestaltung wird die Trägerbaugruppe auf Stehbolzen aufgeschoben, wobei die Bohrung einen solchen Durchmesser aufweist, daß ein Ringspannelement benutzt werden kann, um die Grundplatte in einem beliebigen Abstand auf den Stehbolzen gegen axiales Verschieben zu sichern.

Ein Beispiel der Erfindung ist in der beiliegenden Zeichnung dargelegt. Dabei zeigen
- die Figur 1: einen Schnitt der Gesamteinrichtung
- die Figur 2: eine besondere Ausgestaltung eines Auswerfelementes.

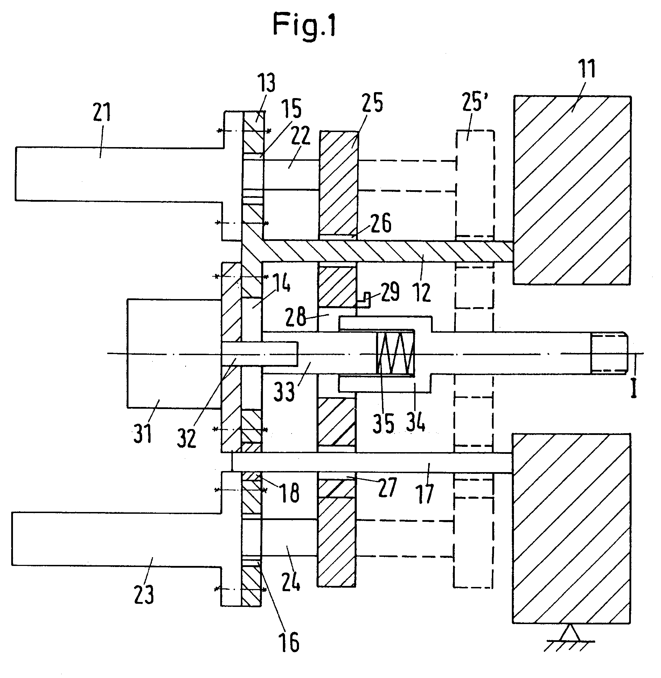

Die Figur 1 zeigt die bewegliche Formplatte 11, an der über Distanzelemente 12 eine Trägerplatte 13 befestigt ist. Die Trägerplatte 13 weist eine zentrale Bohrung 14 auf und besitzt Öffnungen 15 und 16, durch die Kolbenstangen 22 und 24 von an der Trägerplatte 13 befestigten Auswerfzylindern 21 und 23 geführt sind. Kopfseitig an den Kolbenstangen 22, 24 ist eine Auswerferplatte 25 befestigt, die Öffnungen 26, Aussparungen 27 und Bohrungen 28 besitzt. Durch die Bohrung 28 ist die aus einem antriebsseitigen Teil 33 und einem von diesem durch ein Federelement 33 verspannten, abtriebsseitigen Teil 34 bestehende Welle geführt, die auf den Motrwellenzapfen 32 eines Ausschraubmotors 31 gesteckt ist.

Im oberen Bereich der Figur 1 ist die Trägerplatte 13 konstant distanziert über das Distanzelement 12 mit der beweglichen Formplatte 11 verbunden, im unteren Bereich sind Stehbolzen 17 vorgesehen, die über Ringelemente diese mit der Trägerplatte verspannen und eine stufenlose Distanzierung ermöglichen.

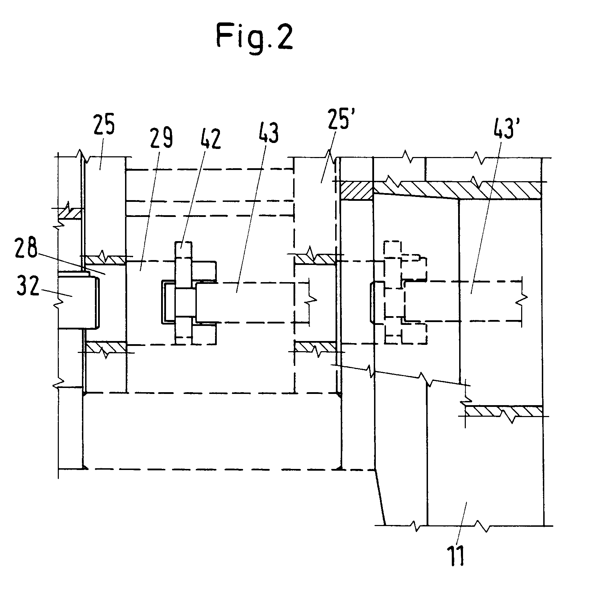

Die Figur 2 zeigt die Auswerferplatte 25, in deren zentrischer Bohrung 28 ein Formelement 29 vorgesehen ist, an das mittels einer Kupplung 42 ein Auswerfbolzen 43 gekuppelt ist. Der mit 43'gekennzeichnete Auswerferbolzen zeigt die Arbeitsstellung bei vorgefahrener Auswerferplatte 25'.

## Patentansprüche

1. Einrichtung zum Entfernen von spritzgegossenen Formteilen aus einem Formwerkzeug einer eine bewegliche Formaufspannplatte (11) aufweisenden Spritzgießmaschine, insbesondere für Kunststoffe, wobei
- an der beweglichen Formaufspannplatte (11) über Distanzelemente (12) von dieser beabstandet eine Trägerplatte (13) vorgesehen ist,
- an der Trägerplatte (13) koaxial zur Formmittenachse (I) ein Ausschraubmotor (31) vorgesehen ist, dessen Motorwellenzapfen (32) durch eine zentrische Bohrung (14) der Trägerplatte (13) geführt ist,
- achsparallel zur Formmittenachse (I) mindestens zwei Auswerfzylinder (21, 23) vorgesehen sind, die an der Trägerplatte (13) befestigt sind und deren Kolbenstangen (22, 24) durch Öffnungen (15, 16) der Trägerplatte (13) geführt sind, und
- an den Kolbenstangen (22, 24) kopfseitig eine Auswerfplatte (25) befestigt ist, in die eine zentrische Bohrung (28) eingebracht ist,durch die der antriebsseitige Wellenteil (33) des Ausschraubmotors (31) geführt ist.

2. Einrichtung zum Entfernen von Formteilen nach Anspruch 1, wobei
- auf den Wellenzapfen (36) des Ausschraubmotors (31) eine zweiteilige Welle (33, 34) aufsetzbar ist, und
- zwischen dem antriebsseitigen Wellenteil (33) und dem abtriebsseitigen Wellenteil (34) ein diese gegenseitig verspannendes Federelement (35) vorgesehen ist.

3. Einrichtung zum Entfernen von Formteilen nach Anspruch 1, wobei
an der Auswerfplatte (25) im Bereich der zentrischen Bohrung (28) der Auswerfplatte (25) Formelemente (29) vorgesehen sind, an die eine Kupplung (42) eines Auswerferbolzens (43) anbringbar ist.

4. Einrichtung zum Entfernen von Formteilen nach Anspruch 1, wobei
das Distanzelement (12) als Stehbolzen (17) ausgebildet ist, auf den ein Ringelement (18) aufbringbar ist, das mit der Trägerplatte (13) lösbar verbindbar ist.

## Claims

1. An apparatus for removing injection-moulded parts from a moulding die of an injection-moulding machine having a movable mould clamping plate (11), in particular for plastics materials, wherein
- a support plate (13) is provided on the movable mould clamping plate (11), spaced apart therefrom by spacer elements (12),
- an unscrewing motor (31) is provided on the support plate (13) coaxially to the mould centre axis (I), the motor shaft journal (32) of which passes through a central bore (14) in the support plate (13),
- at least two ejection cylinders (21, 23) are provided paraxially to the mould centre axis (I), which cylinders are fastened to the support plate (13) and the piston rods (22, 24) of which pass through openings (15, 16) in the support plate (13), and
- an ejection plate (25) is fastened to the head end of the piston rods (22, 24), in which plate a central bore (28) is made through which the drive-side shaft part (33) of the unscrewing motor (31) passes.

2. An apparatus for removing moulded parts according to Claim 1, wherein
- a two-part shaft (33, 34) can be placed on the shaft journal (36) of the unscrewing motor (31), and
- between the drive-side shaft part (33) and the power takeoff-side shaft part (34) there is provided a spring element (35) which mutually braces them.

3. An apparatus for removing moulded parts according to Claim 1, wherein shaped elements (29) are provided on the ejection plate (25) in the region of the central bore (28) of the ejection plate (25), to which elements a coupling (42) of an ejector pusher (43) can be attached.

4. An apparatus for removing moulded parts according to Claim 1, wherein the spacer element (12) is in the form of a stay bolt (17) to which a ring element (18) can be attached which can be detachably connected to the support plate (13).

## Revendications

1. Dispositif pour évacuer des pièces coulées par injection d'un moule d'une machine de coulée par injection présentant une plaque de fixation de moule (11) mobile, en particulier pour des matières synthétiques,
- une plaque de support (13) étant prévue sur la plaque de fixation de moule mobile (11) en étant écartée de celle-ci par des entretoises (12),
- un moteur de dévissage (31) étant prévu sur la plaque de support (13) coaxialement à l'axe central (I) du moule, dont le tourillon de l'arbre du moteur (32) est guidé à travers un perçage central (14) de la plaque de support (13),
- parallèlement à l'axe central du moule (I), sont prévus au moins deux vérins d'éjection (21,23), qui sont fixés sur la plaque de support (13) et dont les tiges de piston (22,24) sont guidées à travers des ouvertures (15,16) de la plaque de support (13), et
- sur les tiges de piston (22,24), du côté de tête, il est fixé une plaque d'éjection (25) dans laquelle est prévu un perçage central (28) à travers lequel la partie d'arbre (33), du côté d'entraînement, du moteur de dévissage (31) est guidée.

2. Dispositif pour évacuer des pièces coulées selon la revendication 1,
- un arbre en deux parties (33,34) pouvant être monté sur le tourillon d'arbre (36) du moteur de dévissage (31), et
- entre la partie d'arbre (33) du côté d'entraînement et la partie d'arbre (34) du côté de sortie, il est prévu un élément élastique (35) tendant mutuellement celles-ci.

3. Dispositif pour évacuer des pièces coulées selon la revendication 1, des éléments de moule (29) étant prévus sur la plaque d'éjection (25) dans la zone du perçage central (28) de la plaque d'éjection (25), éléments sur lesquels peut être monté un accouplement (42) d'un axe d'éjecteur (43).

4. Dispositif pour évacuer des pièces coulées selon la revendication 1, l'entretoise (12) étant réalisée comme tirant (17), sur lequel peut être agencé un élément annulaire (18) qui peut être relié de façon amovible à la plaque de support (13).
